Europäisches Patentamt

European Patent Office

Office européen des brevets

(19)

(11) Veröffentlichungsnummer: **0 078 255**
**B2**

(12) **NEUE EUROPÄISCHE PATENTSCHRIFT**

(45) Veröffentlichungstag der neuen Patentschrift:
29.08.90

(51) Int. Cl.⁵: **G 01 B 11/10**

(21) Anmeldenummer: **81901531.4**

(22) Anmeldetag: **10.06.81**

(86) Internationale Anmeldenummer:
**PCT/CH81/00064**

(87) Internationale Veröffentlichungsnummer:
**WO 82/04117 25.11.82 Gazette 82/28**

(54) OPTISCHES MESSORGAN ZUR QUERSCHNITTSBESTIMMUNG VON FÄDEN UND DRÄHTEN.

(30) Priorität: **15.05.81 CH 3181/81**

(43) Veröffentlichungstag der Anmeldung:
**11.05.83 Patentblatt 83/19**

(45) Bekanntmachung des Hinweises auf die
Patenterteilung:
**27.11.85 Patenblatt 85/48**

(45) Bekanntmachung des Hinweises auf die
Entscheidung u̇ber den Einspruch:
**29.08.90 Patentblatt 90/35**

(84) Benannte Vertragsstaaten:
**AT DE FR GB NL**

(56) Entgegenhaltungen:
**DE-A-2 818 789**
**DE-B-2 337 413**
**US-A-2 641 960**
**US-A-3 582 661**
**US-A-3 900 730**

(73) Patentinhaber: **ZELLWEGER USTER AG**
**Wilstrasse 11**
**CH-8610 Uster (CH)**

(72) Erfinder: **AEPPLI, Kurt**
**Grundstrasse 4**
**CH-8610 Uster (CH)**

(74) Vertreter: **Dipl.-Phys.Dr. Manitz Dipl.-Ing., Dipl.-W.-Ing. Finsterwald Dipl.-Ing. Grämkow Dipl.-Chem.Dr. Heyn Dipl.-Phys. Rotermund Morgan, B.Sc.(Phys.) Robert-Koch-Strasse 1 D-8000 München 22 (DE)**

EP 0 078 255 B2

Courier Press, Leamington Spa, England.

## Beschreibung

Die Erfindung betrifft ein optisches Meßorgan zur Querschnittbestimmung von Fäden und Drähten, bei dem ein Oszillator zur Erzeugung eines elektrischen Modulationssignals vorgesehen ist, das einer einzigen Lichtquelle zugeführt ist, der von der Lichtquelle ausgehende modulierte Lichtstrom in eine Referenzstrecke und eine Meßstrecke aufgeteilt ist, die in Meß- und Referenzstrecke auftretenden Lichtströme durch entsprechende Wandler (17 und 19) empfangen und in elektrische Ströme ($I_1$, $I_2$) umgewandelt werden, das Differenzspannungssignal ($U_1$) der in den beiden Wandlern erzeugten elektrischen Ströme ($I_1$, $I_2$) einer eine Gleichspannung erzeugenden Auswerteeinheit zugeführt wird, die Referenzstrecke auf ein konstantes mittleres Empfangssignal regelbar ist und die Lichtquelle (13) von einer vom Oszillator (12) gelieferten symmetrischen Rechteckspannung ($U_2$) moduliert ist.

Ein derartiges optisches Messorgan ist aus der US-A-3 582 661 bekannt. Bei diesem bekannten optischen Messorgan lässt sich eine Alterung der opto-elektrischen Wandler durch den Regelkreis kompensieren, und es wird ferner aufgrund der Verwendung von Photodioden, die weitgehend gleiche Betriebsbedingungen aufweisen, einer Temperaturdrift entgegengewirkt. Nachteilig ist jedoch, dass durch Fremdlichteinflüsse auf der Messstrecke Störungen entstehen können.

Demgemäss liegt der Erfindung die Aufgabe zugrunde, in der Praxis häufig vorkommende, von Fremdlichteinflüssen auf der Messstrecke herrührende Störungen auszuschalten und damit einen zuverlässigen Langzeitbetrieb des Messorgans zu gewährleisten.

Gelöst wird diese Aufgabe bei einem Messorgan der eingangs genannten Art nach der Erfindung dadurch, dass die Lichtquelle von einer vom Oszillator gelieferten Rechteckspannung moduliert ist, dass die Auswerteeinheit einen Multiplikator aufweist, dem einerseits das Differenzspannungssignal der in beiden Wandlern erzeugten Ströme und andererseits die vom Oszillator gelieferte Rechteckspannung mit konstanter Amplitude, welche dem Differenzspannungssignal frequenz- und phasengleich ist, zugeführt wird und dass die am Ausgang des Multiplikators auftretende Gleichspannung ein Mass für den Querschnitt darstellt.

Durch diese Massnahmen werden störende Wechsellichteinflüsse auf die Messstrecke in Frequenzbereiche versetzt, die mittels eines Tiefpasses ohne weiteres unterdrückt werden können. Dadurch, dass an einen Eingang des Multiplikators das auszuwertende, in seiner Reinform Rechteckcharakter besitzende Signal und an den anderen Eingang des Multiplikators ein dem Auswertesignal frequenz- und phasengleiches Rechtecksignal mit konstanter Amplitude angelegt wird, können auch Störspannungen mit vergleichsweiser Amplitude beseitigt werden.

Weitere vorteilhafte Ausgestaltungen der Erfindung sind in den Unteransprüchen angegeben.

Ein Ausführungsbeispiel der Erfindung ist in der beigefügten schematischen Zeichnung dargestellt. Anhand dieses Zeichnung wird nachfolgend die Erfindung näher erläutert.

In einer Oszillator 12 wird eine symmetrische Rechteckspannung $U_2$ von beispielsweise 20 kHz erzeugt. Eine Licht emittierende Diode (LED) 13 wird über einen Modulator 10 mit diesem Rechtecksignal gepulst. Die Amplitude der Impulse und damit die Helligkeit des von der LED 13 abgestrahlten Lichtes lässt sich durch eine Regelspannung $U_r$ steuern, die von einem Integrator 14 dem Modulator 10 zugeführt wird. Am Eingang des Integrators 14 liegt die in einem Subtrahierer 15 gewonnen Differenz zwischen einem Sollwert $I_s$ und dem Photodiodensignal $I_1$. Der derart aufgebaute Regelkreis liefert schliesslich ein Photodiodensignal $I_1$, das gleich $I_s$ ist.

Das von der LED 13 abgestrahlte Licht fällt einerseits auf eine Blende 16, bzw. durch deren Öffnung 16' auf eine erste Photodiode 17. Die Öffnung 16' der Blende 16 ist mit Vorteil einstellbar gestaltet, um verschieden grosse Lichtströme auf die Photodiode 17 zu richten.

Ein weiterer Teil des Lichtes der LED 13 trifft auf das Messobjekt 18, das ein Faden oder ein Draht sein kann. Der vom Messobjekt 18 nicht absorbierte bzw. reflektierte Teil dieses Lichtbündels fällt auf eine zweite Photodiode 19, die mit der ersten Photodiode 17 in Reihe liegt. Ihr gemeinsamer Verbindungspunkt ist mit B bezeichnet.

Mittels der erwähnten einstellbaren Blende 16 kann der Lichtdurchlass so gesteuert werden, dass die Photoströme $I_1$, $I_2$ der Photodioden 17 und 19 etwa gleich gross sind. Das Eingangssignal $U_1$ an einem Multiplikator 20 ist dann 0. Im Multiplikator 20 wird das Produkt $U_1 \cdot U_2 = U_a$ gebildet. Wenn $U_1$ und $U_2$ Rechteckspannungen gleicher Frequenz und Phase sind, ist $U_a$ eine Gleichspannung. Da in der Praxis perfekte Rechteckspannungen nicht erzielt werden können, enthält das Ausgangssignal $U_a$ restliche Wechselspannungskomponenten, die aber in einem Tiefpassfilter 21 entfernt werden können.

Zwischen dem Verbindungspunkt B und dem Multiplikator 20 ist ein Hochpass mit Kondensator 22 und Widerstand 23 vorgesehen, der allfällige Einflüsse von Gleichlicht auf die Photodiode 19 abriegelt.

Durch zweckmässige konstruktive Ausbildung der Mess- und Referenzstrecken kann das Messorgan nicht nur kompakt und somit vielseitig verwendbar gemacht werden; damit wird auch erreicht, dass die Photodioden 17, 19 in mindestens angenähert gleichen Umgebungsbedingungen betrieben werden, was die Zuverlässigkeit der Messsignale erheblich begünstigt.

Die in der Referenzstrecke liegende Photodiode 17 wird mit Vorteil so angeordnet, dass sie nicht von Fremdlicht beeinflusst wird, m.a.W. die Referenzstrecke samt Blende 16 wird in einem weitgehend lichtundurchlässigen Gehäuse eingekapselt; die Messstrecke mit Photodiode 19 jedoch liegt nicht in diesem Gehäuse.

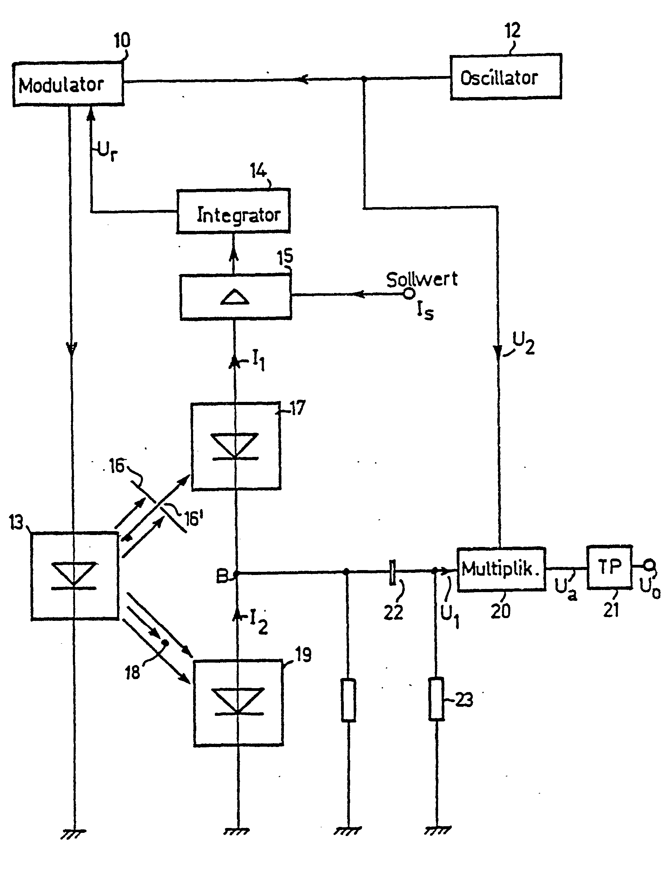

**Patentansprüche**

1. Optisches Meßorgan zur Querschnittbestimmung von Fäden und Drähten, bei dem ein Oszillator (12) zur Erzeugung eines elektrischen Modulationssignals vorgesehen ist, das einer einzigen Lichtquelle (13) zugeführt ist, der von der Lichtquelle (13) ausgehende modulierte Lichtstrom in eine Referenzstrecke und eine Meßstrecke aufgeteilt ist, die in Meß- und Referenzstrecke auftretenden Lichtströme durch entsprechende Wandler (17 und 19) empfangen und in elektrische Ströme ($I_1$, $I_2$) umgewandelt werden, das Differenzspannungssignal ($U_1$) der in den beiden Wandlern erzeugten elektrischen Ströme ($I_1$, $I_2$) einer eine Gleichspannung erzeugenden Auswerteeinheit zugeführt wird, die Referenzstrecke auf ein konstantes mittleres Empfangssignal regelbar ist und die Lichtquelle (13) von einer vom Oszillator (12) gelieferten symmetrischen Rechteckspannung ($U_2$) moduliert ist, dadurch gekennzeichnet, daß die Auswerteeinheit einen Multiplikator (20) aufweist, dem einerseits das Differenzspannungssignal ($U_1$) der in beiden Wandlern (17 und 19) erzeugten Ströme ($I_1$, $I_2$) und andererseits die vom Oszillator (12) gelieferte Rechteckspannung ($U_2$) mit konstanter Amplitude, welche dem Differenzspannungssignal frequenz- und phasengleich ist, zugeführt wird und daß die am Ausgang des Multiplikators (20) auftretende Gleichspannung ($U_a$) ein Maß für den Querschnitt darstellt.

2. Optisches Messorgan nach Anspruch 1, gekennzeichnet durch einen an einem gemeinsamen Verbindungspunkt (B) der in Reihe liegenden Wandler (17 und 19) angeschlossenen Hochpass mit Kondensator (22) und Widerstand (23).

3. Optisches Messorgan nach Anspruch 1 oder 2, gekennzeichnet durch einen Tiefpass (21) am Ausgang des Multiplikators (20) zur Aussiebung restlicher Frequenzanteile des Ausgangssignals ($U_a$) des Multiplikators (20).

4. Optisches Messorgan nach Anspruch 1, dadurch gekennzeichnet, dass ein an den Ausgang des Oszillators (12) geschalteter Modulator (10) eine Regelspannung ($U_r$) erhält, die aus der in einem Integrator (14) gemittelten Differenz zwischen dem Photostrom ($I_1$) der Referenzstrecke und einem Sollwert ($I_s$) gebildet ist.

**Revendications**

1. Organe de mesure optique pour la détermination de sections de fils et câbles, où un oscillateur (12) est prévu pour la formation d'un signal de modulation électrique, qui est transmis à une source lumineuse unique (13), le flux lumineux modulé issu de la source lumineuse (13) est divisé en une section de référence et une section de mesure, les flux lumineux se présentant dans les sections de mesure et de référence étant reçus par des convertisseurs correspondants (17 et 19) et transformés en courants électriques ($I_1$, $I_2$), le signal de tension différentielle ($U_1$) des courants électriques ($I_1$, $I_2$) produits dans les deux convertisseurs sont appliqués à une unité de traitement produisant une tension continue, la section de référence est réglable sur un signal de réception moyen constant et la source lumineuse (13) est modulée par une tension rectangulaire symétrique ($U_2$) fournie par l'oscillateur (12), caractérisé en ce que, l'unité de traitement comporte un multiplicateur (20) auquel on applique d'une part, le signal de tension différentielle ($U_1$) des courants ($I_1$, $I_2$) produits dans les deux convertisseurs (17 et 19) et d'autre part, la tension rectangulaire ($U_2$) fournie par l'oscillateur (12) avec une amplitude constante, laquelle est conforme en fréquence et en phase au signal de tension différentielle et en ce que la tension continue ($U_a$) se présentant à la sortie du multiplicateur (20) représente une mesure pour la section.

2. Organe de mesure optique selon la revendication 1, caractérisé par un filtre passe-haut avec condensateur (22) et résistance (23) raccordé à un point de jonction (B) commun des convertisseurs (17 et 19) montés en série.

3. Organe de mesure optique selon la revendication 1 ou 2, caractérisé par un filtre passe-bas (21) à la sortie du multiplicateur (20) destiné à filtrer les composantes de fréquence résiduelles du signal de sortie ($U_a$) du multiplicateur (20).

4. Organe de mesure optique selon la revendication 1, caractérisé en ce qu'un modulateur (10) connecté à la sortie de l'oscillateur (12) reçoit une tension de réglage ($U_r$) qui est formée à partir de la différence déterminée dans un intégrateur (14) entre le courant ($I_1$) de la section de référence et une valeur de consigne ($I_s$).

**Claims**

1. An optical measuring device for determining the cross-section of threads and wires in which an oscillator (12) is provided for generating an electrical modulation signal which is supplied to a single light source (13), wherein the modulated light flux emerging from the light source (13) is divided into a reference path and a measuring path, wherein the light fluxes which appear in the measuring path and in the reference path are received by corresponding converters (17 and 19) and converted into electrical currents ($I_1$, $I_2$), wherein the difference voltage signal ($U_1$) of the electrical currents ($I_1$, $I_2$) generated in the two converters is passed to a processing unit which generates a DC voltage, wherein the reference path can be regulated to a constant mean received signal and wherein the light source (13) is modulated by a rectangular wave voltage ($U_2$) delivered from the oscillator (12), characterized in that the processing unit has a multiplier (20) to which is supplied, on one hand, the difference voltage signal ($U_1$) of the currents ($I_1$, $I_2$) generated in the two converters (17 and 19) and, on the other hand, the rectangular wave voltage ($U_2$) of constant amplitude delivered by the oscillator (12), with said rectangular wave voltage ($U_2$) being of the same frequency as and of the same phase as the difference voltage signal; and in that the DC

voltage (U$_a$) which appears of the output of the multiplier (20) represents a measure for the cross-section.

2. An optical measuring device in accordance with claim 1, characterised by a high pass filter with capacitor (22) and resistor (23) connected to a common connection point (B) of the converters (17 and 19) which lie in series.

3. An optical measuring device in accordance with claim 1 or claim 2, characterised by a low pass filter (21) at the output of the multiplier (20) for filtering out residual a.c. components of the output signal (U$_a$) of the multiplier (20).

4. An optical measuring device in accordance with claim 1, characterised in that a modulator (10) connected to the output of the oscillator (12) receives a regulation voltage (U$_r$) which is formed by the difference averaged in an integrator (14) between the photo current (I$_1$) of the reference path and a desired value (I$_s$).